# EUROPÄISCHE PATENTSCHRIFT

(11) **EP 4 444 920 B1**
(45) Veröffentlichungstag und Bekanntmachung des Hinweises auf die Patenterteilung: **17.09.2025**
(21) Anmeldenummer: 21836420.6
(22) Anmeldetag: 09.12.2021
(51) Int. Cl.: C21B 7/12, F27D 1/16, F27D 3/15

(54) **MANIPULATORARM SOWIE MANIPULATOR MIT EINEM MANIPULATORARM**
MANIPULATOR ARM, AND MANIPULATOR COMPRISING A MANIPULATOR ARM
BRAS MANIPULATEUR, ET MANIPULATEUR COMPRENANT UN BRAS MANIPULATEUR

(43) Veröffentlichungstag der Anmeldung: 16.10.2024
(73) Patentinhaber: Tmt - Tapping Measuring Technology Sàrl, 1122 Luxembourg (LU)
(72) Erfinder: ZUANG, Max, 3466 Dudelange (LU); CLESEN, Romain, 8528 Colpach-Haut (LU); FLAMMANG, Marc, 8355 Garnich (LU)
(74) Vertreter: advotec.
(86) Internationale Anmeldenummer: PCT/EP2021/085010
(87) Internationale Veröffentlichungsnummer: WO 2023/104309

(56) Entgegenhaltungen:
- CN-U- 205 897 859
- JP-B2- 2 896 488
- SU-A1- 854 989
- US-A- 5 414 887
- US-A- 5 735 647

## Beschreibung

Die Erfindung betrifft einen Manipulatorarm zum Anschluss an ein insbesondere in der Peripherie eines metallurgischen Schmelzofens angeordnetes Manipulatorfahrwerk, wobei der Manipulatorarm ein proximales Ende zum Anschluss an das Manipulatorfahrwerk und ein mit einer ersten Werkzeugaufnahme versehenes distales Ende zum Anschluss einer Schaufel aufweist. Des Weiteren betrifft die Erfindung einen mit einem derartigen Manipulatorarm versehenen Manipulator.

Für den Betrieb eines metallurgischen Schmelzofens sind eine Vielzahl von in der Peripherie des Schmelzofens angeordnete Einrichtungen erforderlich, die etwa einen Abstich des Ofens zur Entnahme des schmelzflüssigen Metalls in eine Abstichrinne und zur Wartung der Abstichrinne umfassen. Für den Ofenabstich werden dabei regelmäßig benachbart dem Abstichloch fest installierte Stichlochbohreinheiten verwendet, die mit einer Bohrstange versehen sind und eine Öffnung des Abstichlochs ermöglichen. Zum Verschließen des Abstichlochs ist darüber hinaus eine Stichlochstopfeinrichtung vorgesehen. Weiterhin werden oftmals ebenfalls fest installierte Manipulatoren im Bereich des Abstichlochs vorgesehen, die eine Handhabung von Schutzhauben ermöglichen, mit denen die Abstichrinne im Anschluss an das Abstichloch abgedeckt werden kann.

Wie aus der vorstehenden Schilderung deutlich wird, resultieren aus der Vielzahl von in der Schmelzofenperipherie angeordneten Einrichtungen beengte räumliche Verhältnisse für den Einsatz von Einrichtungen zur Wartung des Abstichkanals, wobei die Wartung insbesondere ein Aufbrechen von nach einem Ofenabstich in der Abstichrinne verbliebenen Schmelzerückständen oder Schlacke sowie deren Entfernung aus dem Abstichkanal umfassen. In der Regel werden die Rückstände mittels eines Hammerwerks zertrümmert, sodass die Rückstände nachfolgend mit einer Schaufel der Abstichrinne entnommen werden können, wobei die Ausführung dieser Tätigkeiten manuell erfolgt oder zur Ausführung dieser Tätigkeiten ein Manipulator eingesetzt wird, der mit einem geeigneten Hammerwerk versehen ist, und zusätzlich ein Manipulator eingesetzt wird, der mit einer Baggerschaufel versehen ist.

Die bislang zum Einsatz kommenden Manipulatoren, wie z.B. in der CN 205897859 U beschrieben, weisen hierzu einen Manipulatorarm auf, der an seinem distalen Ende mit einem Werkzeugadapter versehen ist, welcher die alternative Anordnung eines Hammerwerks oder einer Baggerschaufel ermöglicht, wobei bei einem Werkzeugwechsel jedes Mal die Versorgungsanschlüsse der regelmäßig hydraulisch betätigten Werkzeuge neu anzuschließen sind. Hieraus ergeben sich entsprechend Montagezeiten, die mit einem Werkzeugwechsel verbunden sind, der aufgrund der beengten Verhältnisse in der Hochofenperipherie zudem meist noch abseits des Einsatzortes des Manipulators erfolgen muss. Da das Hammerwerk und die Baggerschaufel einander nachfolgend zum Einsatz kommen, bedingt der Werkzeugwechsel entsprechend lange Wartungszeiten für die Wartung der Abstichrinne, in denen der Schmelzofen nicht betrieben werden kann, womit ein entsprechender Produktionsausfall verbunden ist.

Der Erfindung liegt daher die Aufgabe zugrunde, einen Manipulatorarm vorzuschlagen, der eine Wartung der Abstichrinne innerhalb einer kürzeren Wartungszeit ermöglicht.

Zur Lösung dieser Aufgabe weist der erfindungsgemäße Manipulatorarm die Merkmale des Anspruchs 1 auf.

Erfindungsgemäß weist der Manipulatorarm an seinem distalen Ende eine von der ersten Werkzeugaufnahme unabhängig ausgebildete zweite Werkzeugaufnahme zum Anschluss eines Hammerwerks oder Bohrwerks auf, sodass aufgrund einer permanenten parallelen Anordnung des Hammerwerks oder Bohrwerks und der Schaufel ein Werkzeugwechsel bei der Wartung einer Abstichrinne nicht mehr erforderlich ist und zur Durchführung der Wartung ein mit dem Manipulatorarm versehene Manipulatorfahrwerk nur noch an den Einsatzort verfahren werden muss.

Der bislang mit dem Werkzeugwechsel zwangsläufig verbundene Montageeinsatz entfällt, sodass die für die Wartung der Abstichrinne erforderliche Wartungszeit erheblich verkürzt werden kann.

Aufgrund der möglichen Verkürzung der Wartungszeit ist es auch möglich, Wartungsarbeiten an den Abstichrinnen in kürzeren zeitlichen Abständen durchzuführen, ohne den wirtschaftlichen Betrieb des Schmelzofens zu gefährden. Somit ist es möglich, die Lebensdauer der Abstich-rinnen zu erhöhen.

Die permanente parallele Anordnung eines Hammerwerks oder eines Bohrwerks mit einer Schaufel an ein und demselben Manipulator verringert auch die Investitionskosten für eine mit Manipulator erfolgende Ausführung von ansonsten manuell auszuführenden unfallträchtigen Wartungsarbeiten, sodass eine Erhöhung der Arbeitssicherheit mit wesentlich geringeren Investitionskosten erreichbar ist als dies bei dem bislang notwendigen Einsatz von zwei Manipulatoren der Fall ist.

Der erfindungsgemäße Manipulatorarm kann überall dort eingesetzt werden, wo Brech- oder Abrissarbeiten mit anschließendem Abräumen des gebrochenen Materials erfolgen sollen.

Wenn die erste Werkzeugaufnahme mit einer Drehgelenkeinrichtung für ein gegenüber dem distalen Ende verschwenkbaren Anschluss der Schaufel um eine am distalen Ende angeordnete Schwenkachse versehen ist, und die zweite Werkzeugaufnahme mit einer Linearführungseinrichtung zur Führung der zweiten Werkzeugaufnahme längs einer die Schwenkachse kreuzenden Translationsachse versehen ist, derart, dass ein in der zweiten Werkzeugaufnahme aufgenommenes Werkzeug des Hammerwerks oder Bohrwerks an der Schaufel vorbei geführt werden kann, ist zum einen eine besonderes kompakte Ausgestaltung des Manipulatorarms mit einer dicht benachbarten Relativanordnung der beiden Werkzeugaufnahmen möglich. Zum anderen wird ein Betrieb des Manipulatorarms mit ein und derselben Kinematik sowohl beim Einsatz des Hammerwerks oder Bohrwerks als auch beim Einsatz der Schaufel möglich.

Besonders vorteilhaft ist es, wenn die zweite Werkzeugaufnahme in einem das distale Ende des Manipulatorarms bildenden, mit der Schwenkachse versehenen Armabschnitt ausgebildet ist, derart, dass der Armabschnitt ein die Werkzeugaufnahme aufnehmendes Führungsgehäuse mit der im Führungsgehäuse ausgebildeten Linearführungseinrichtung ausbildet und die Schwenkachse der ersten Werkzeugaufnahme gemeinsam mit der Translationsachse der zweiten Werkzeugaufnahme innerhalb des Armabschnitts angeordnet ist, sodass eine im Hinblick auf die Beanspruchung des Manipulatorarms beim Werkzeugeinsatz gleichermaßen optimierte kinematische Auslegung des Manipulatorarms sowohl für den Einsatz des Hammerwerks oder Bohrwerks als auch für den Einsatz der Schaufel möglich ist.

Bei einer weiteren bevorzugten Ausführungsform des Manipulatorarms ist die zweite Werkzeugaufnahme seitlich versetzt zu einem das distale

Ende des Manipulatorarms bildenden Armabschnitt angeordnet, derart, dass ein die zweite Werkzeugaufnahme aufnehmendes Führungsgehäuse neben dem Armabschnitt angeordnet ist, sodass sowohl die zweite Werkzeugaufnahme als auch die Linearführungseinrichtung zur Führung der zweiten Werkzeugaufnahme unabhängig von der Geometrie des Armabschnitts ausgebildet sein können.

Wenn die zweite Werkzeugaufnahme einen im Führungsgehäuse längs verschiebbar angeordneten Werkzeugschlitten aufweist, kann der Werkzeugschlitten als ein Adapter für unterschiedlich ausgebildete Hammerwerke oder Bohrwerke ausgebildet sein, sodass der Manipulatorarm über die Verwendung eines entsprechend ausgebildeten Werkzeugschlittens in Kombination mit unterschiedlich ausgebildeten Hammerwerken oder Bohrwerken verwendet werden kann und der Anwender somit in der Auswahl eines Hammerwerks oder eines Bohrwerks als Werkzeug zum Aufbrechen von in der Abstichrinne ausgebildeten Rückständen frei ist. Insbesondere kann der Anwender wahlweise ein Hammerwerk oder ein Bohrwerk einsetzen.

Der erfindungsgemäße Manipulator ist mit einem erfindungsgemäßen Manipulatorarm versehen, wobei das Manipulatorfahrwerk in einer ersten erfindungsgemäßen Variante des Manipulators als nicht schienengebundenes Manipulatorfahrwerk ausgebildet ist. Vorzugsweise ist das Manipulatorfahrwerk als Raupenfahrwerk ausgebildet, sodass ein Einsatz des Manipulatorarms auch auf unbefestigtem Untergrund erfolgen kann. Insbesondere bei mit Fahrbahnoberflächen versehen Untergründen kann das Fahrwerk auch als Radfahrwerk ausgebildet sein. Insbesondere in den vorstehend beispielhaft genannten Fällen kann der Manipulator auch als Baggerfahrzeug bezeichnet werden.

Bei einer weiteren erfindungsgemäßen Variante des Manipulators ist das Manipulatorfahrwerk schienengebunden ausgeführt, sodass ein besonders exaktes und reproduzierbares Verfahren des Manipulatorarms, wie es insbesondere in der Peripherie eines metallurgischen Schmelzofens erforderlich ist, leicht realisierbar ist.

Besonders vorteilhaft ist es in diesem Fall, wenn das Manipulatorfahrwerk in hängender Anordnung an Schienen geführt ist, sodass insbesondere beim Einsatz des Manipulators in der Peripherie eines metallurgischen Schmelzofens weder Bodenhindernisse den Betrieb des Manipulators beeinträchtigen können, noch der Betrieb des Manipulators definierte Bodenverhältnisse voraussetzen würde.

Nachfolgend wird eine bevorzugte Ausführungsform eines Manipulatorarms sowie eine bevorzugte Ausführungsform eines mit einem Manipulatorarm versehenen Manipulators anhand der Zeichnung näher erläutert.

Es zeigen:
- **Fig. 1**: Einen Manipulator mit einem an einem Manipulatorfahrwerk angeordneten Manipulatorarm in einer ersten Ausführungsform und in Betriebsstellung;
- **Fig. 2**: den in **Fig. 1** dargestellten Manipulator mit dem in Ruhestellung angeordneten Manipulatorarm;
- **Fig. 3**: den distalen Armabschnitt des in **Fig. 1** dargestellten Manipulatorarm in Einzeldarstellung und in Schaufelkonfiguration;
- **Fig. 4**: den in **Fig. 3** dargestellten distalen Armabschnitt des Manipulatorarms in Seitenansicht;
- **Fig. 5**: den in **Fig. 4** dargestellten Armabschnitt in Draufsicht;
- **Fig. 6**: den in **Fig. 4** dargestellten Armabschnitt in einer Längsschnittdarstellung mit in Öffnungsstellung angeordneter Schaufel;
- **Fig. 7**: den in **Fig. 4** dargestellten Armabschnitt in einer Längsschnittdarstellung mit in Schließstellung angeordneter Schaufel;
- **Fig. 8**: den in **Fig. 4** dargestellten Armabschnitt in einer Querschnittsdarstellung gemäß Schnittlinienverlauf VIII-VIII in **Fig. 4****;**
- **Fig. 9**: den in **Fig. 3** dargestellten distalen Armabschnitt des Manipulatorarms in Hammerkonfiguration;
- **Fig. 10**: den in **Fig. 9** dargestellten Armabschnitt in Seitenansicht;
- **Fig. 11**: den in **Fig. 10** dargestellten Armabschnitt in Längsschnittdarstellung;
- **Fig. 12**: den in **Fig. 1** dargestellten Manipulator in Hammerkonfiguration;
- **Fig. 13**: den in **Fig. 3** dargestellten Armabschnitt gemäß einer weiteren Ausführungsform des Manipulatorarms;
- **Fig. 14**: den in **Fig. 13** dargestellten Armabschnitt in Seitenansicht;
- **Fig. 15**: den in **Fig. 13** dargestellten Armabschnitt in Längsschnittdarstellung.

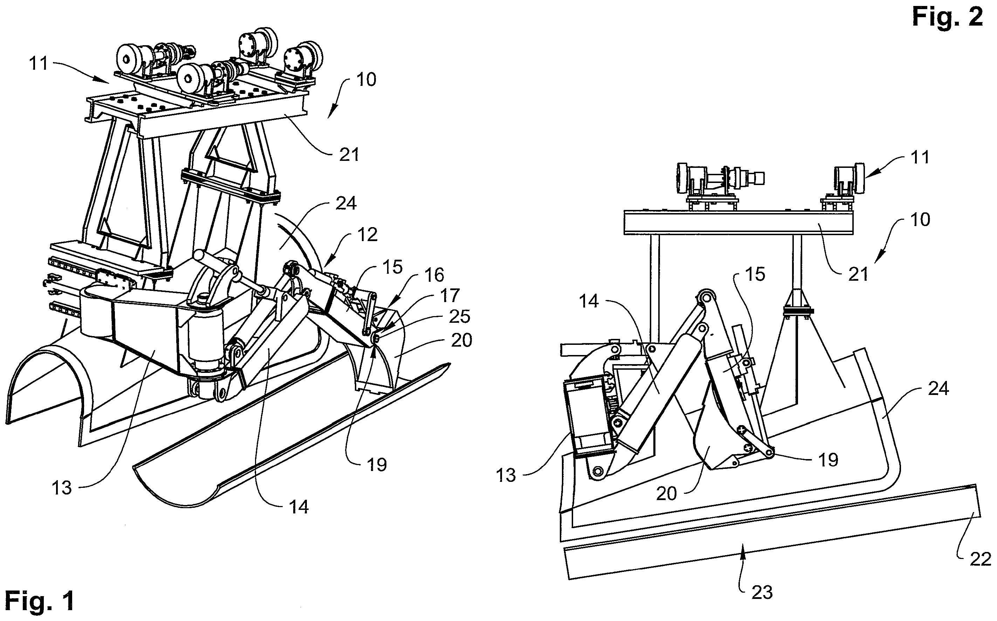

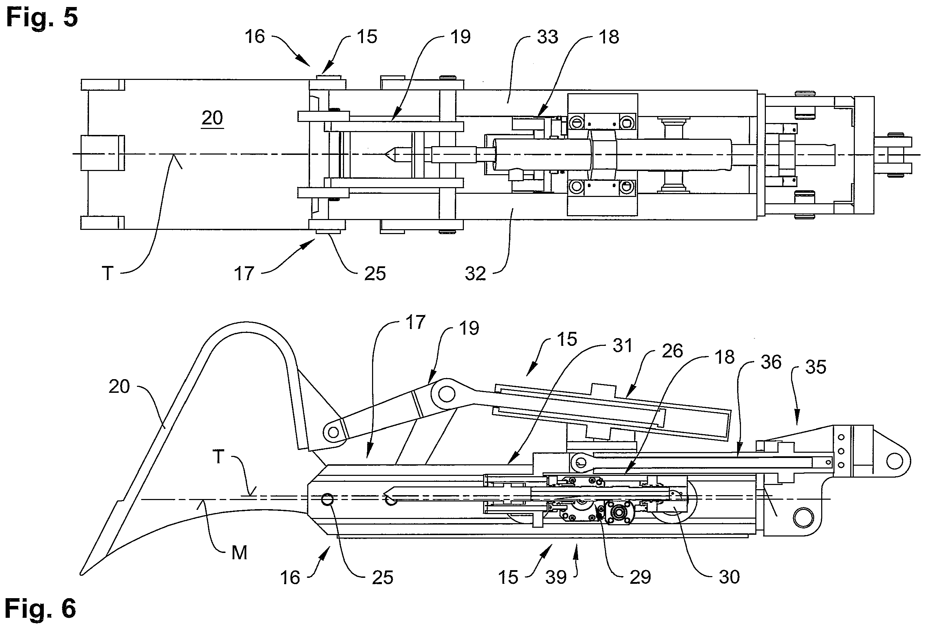

**Fig. 1** zeigt einen Manipulator 10, der einen an einem Manipulatorfahrwerk 11 angeordneten Manipulatorarm 12 aufweist, der mit einer Mehrzahl von drehgelenkig miteinander verbundenen Armabschnitten 13, 14 und 15 versehen ist. Der das distale Ende des Manipulatorarms 12 bildende Armschnitt 15 weist an seinem distalen Ende 16 zwei insbesondere in der **Fig. 6** dargestellte Werkzeugaufnahmen 17, 18 auf, wobei, wie **Fig. 1** zeigt, die Werkzeugaufnahme 17 mit einer Drehgelenkeinrichtung 19 für einen gegenüber dem distalen Ende verschwenkbaren Anschluss einer Schaufel 20 versehen ist.

Bei dem in den **Fig. 1** und **2** dargestellten Manipulator 10 handelt es sich um ein Ausführungsbeispiel, bei dem das Manipulatorfahrwerk 11 hängend an einer Schienenanordnung 21 geführt ist, die sich im Bereich eines Abstichlochs eines hier im Übrigen nicht weiter dargestellten metallurgischen Schmelzofens befindet, wobei die am Manipulatorarm 12 angeordnete Schaufel 20 ein Ausbaggern einer mit einem Einlaufende 22 vor dem Abstichloch positionierten Abstichrinne 23 ermöglicht.

Im Fall des dargestellten Ausführungsbeispiels ist das Manipulatorfahrwerk 11 auf seiner Unterseite mit einer Schutzhaube 24 versehen, die bei geeigneter Positionierung des Manipulatorfahrwerks 11 über der Abstichrinne 23 eine Abdeckung der Abstichrinne 23 ermöglicht, um zu verhindern, dass während eines Ofenabstichs flüssiges Metall in die Umgebung der Abstichrinne 23 gelangen kann. Wie **Fig. 2** weiter zeigt, befindet sich der Manipulatorarm 12 in der in **Fig. 2** dargestellten Abdeckstellung, in der die Schutzhaube 24 mittels des Manipulatorfahrwerks 11 über der Abstichrinne 23 positioniert ist, in seiner Ruhestellung, in der die Armabschnitte 13, 14 und 15 gegeneinander verschwenkt sind sind und die Schaufel 20 mittels der Drehgelenkeinrichtung 19 gegen den distalen Armabschnitt 15 geschwenkt ist.

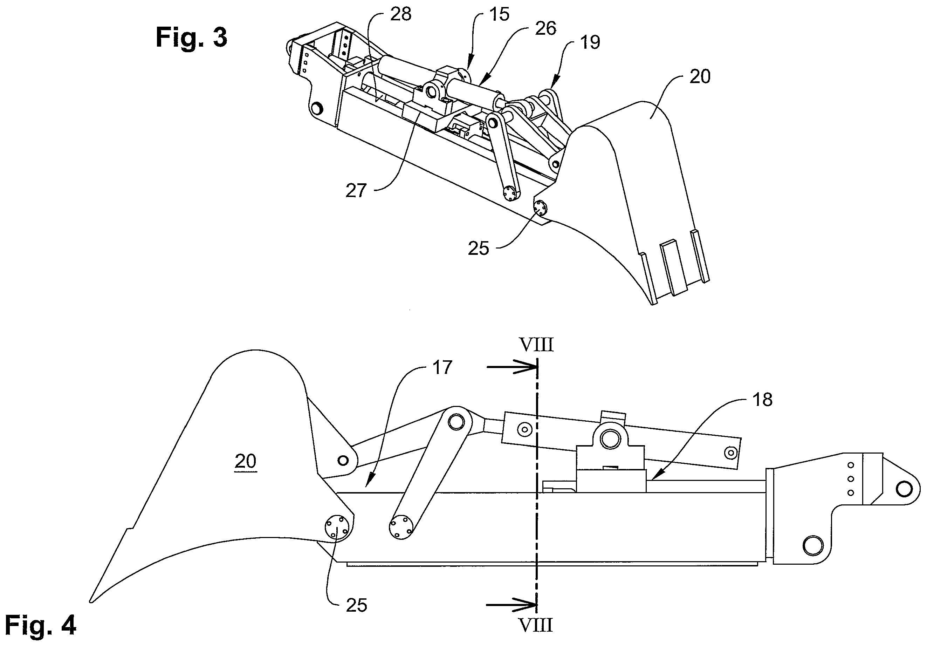

In den **Fign. 3** und **4** ist der distale Armabschnitt 15 entsprechend der in **Fig. 1** dargestellten Arbeitsstellung des Manipulatorarms 12 gezeigt, in der mittels der Drehgelenkeinrichtung 19 die Schaufel 20 in ihre Öffnungsstellung aufgeschwenkt ist, um durch eine nachfolgende mittels der Drehgelenkeinrichtung 19 ausgeführte Schwenkbewegung der Schaufel 20 um eine Schwenkachse 25 Material aus der Abstichrinne 23 zu entnehmen.

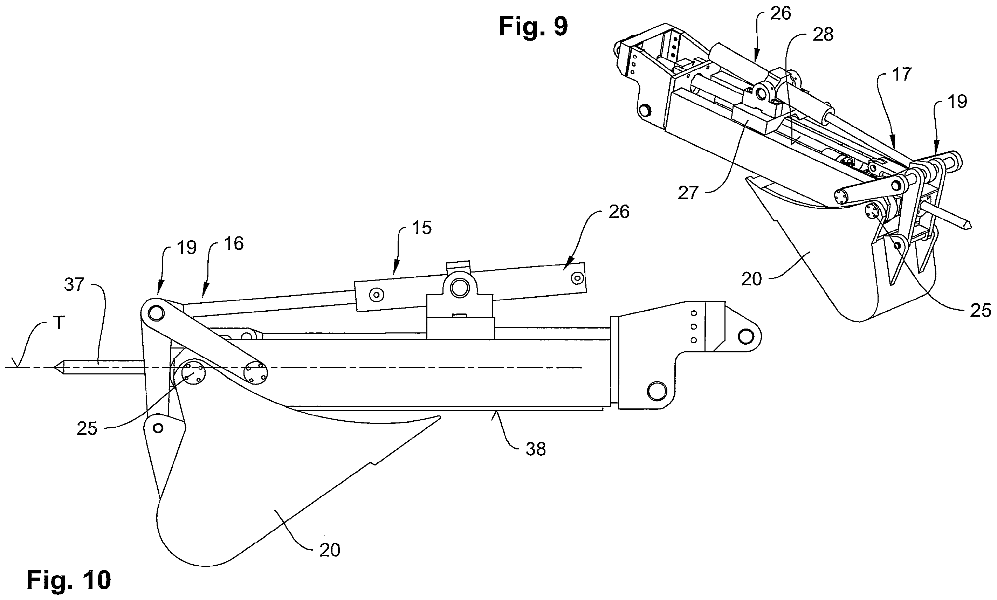

Wie aus einer Zusammenschau der **Fig. 3** und **9** ersichtlich, wird die Drehgelenkeinrichtung 19 im Fall des vorliegend dargestellten Ausführungsbeispiels von einem Antriebszylinder 26 angetrieben, um die Schwenkbewegung der Schaufel 20 um die Schwenkachse 25 auszuführen und somit die Schaufel 20 von der in **Fig. 3** dargestellten Öffnungsstellung in die in **Fig. 9** dargestellte Schließstellung zu überführen. Der Antriebszylinder 26 ist verschwenkbar in einer Aufnahme 27 gelagert, die auf einer Oberseite 28 des Armabschnitts 15 angeordnet ist.

Wie etwa aus einer Zusammenschau der **Fig. 5** und **6** hervorgeht, ist der distale Armabschnitt 15 des Manipulatorarms 12 zusätzlich zu der an seinem distalen Ende 16 ausgebildeten ersten Werkzeugaufnahme 17, die die Drehgelenkeinrichtung 19 und die Schwenkachse 25 umfasst, mit der zweiten Werkzeugaufnahme 18 versehen, die im Fall des vorliegend dargestellten Ausführungsbeispiels zum Anschluss eines Hammerwerks 29 dient, wobei die zweite Werkzeugaufnahme 18 einen Werkzeugschlitten 30 aufweist, der zusammen mit dem ein Führungsgehäuse 31 ausbildenden Armabschnitt 15 eine Linearführungseinrichtung 39 für das Hammerwerk 29 ausbildet.

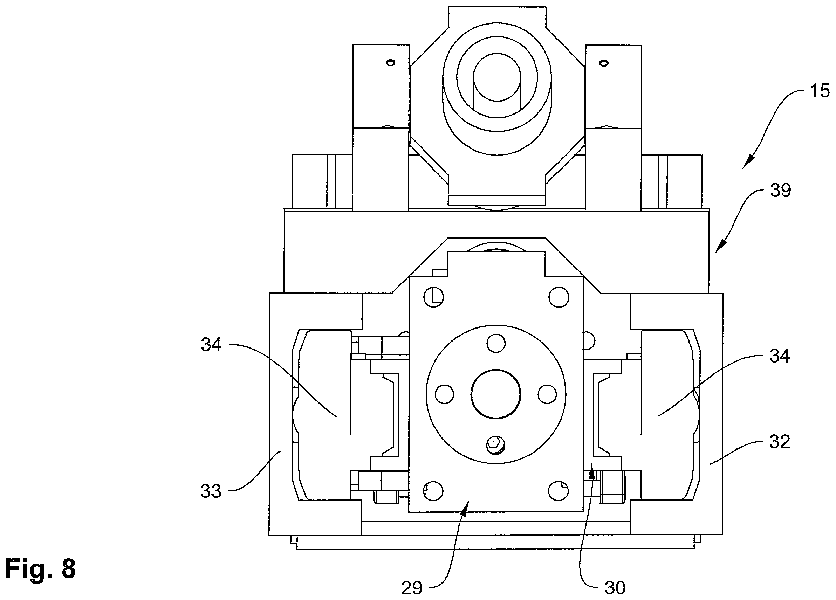

Wie insbesondere **Fig. 8** zeigt, weist der Armabschnitt 15 zur Ausbildung einer bevorzugten Ausführungsform des Führungsgehäuses 31zwei profilschienenartig ausgebildete Seitenwände 32, 33 auf, die im Fall des vorliegenden Ausführungsbeispiels aus zwei mit ihrer Profilöffnung einander gegenüberliegend angeordneten C-Profilen gebildet sind, die zur Längsführung des Werkzeugschlittens 30 mittels am Werkzeugschlitten 30 angeordneten Führungsrollen 34 dienen. Mittels des Werkzeugschlittens 30 kann das Hammerwerk 29 auf einer Translationsachse T **(****Fign. 5 und 6****)** geführt werden, die im vorliegenden Fall annähernd mit der Mittellängsachse M des Armabschnitts 15 zusammenfällt. Anstelle der vorstehend erläuterten Rollenführung kann das Hammerwerk bzw, der Werkzeugschlitten des Hammerwerks in einer Gleitführung geführt ein.

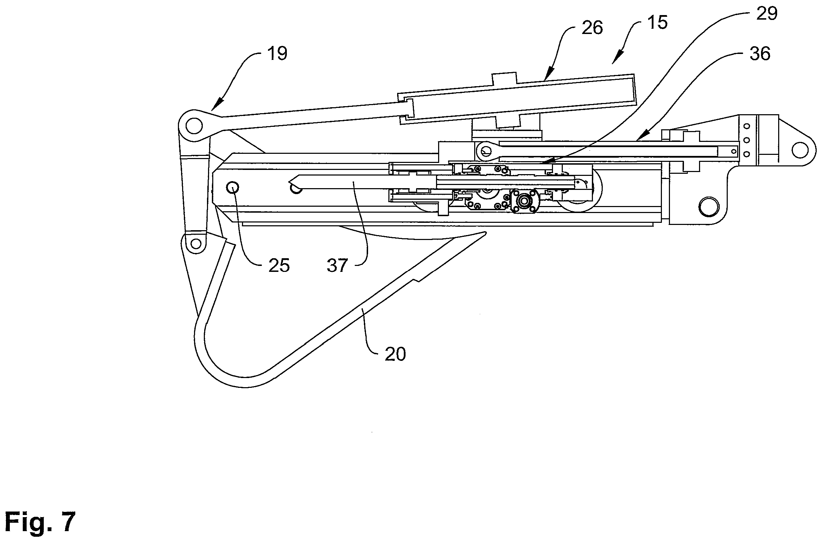

In der in **Fig. 6** dargestellten Schaufelkonfiguration des Armabschnitts 15 befindet sich das Hammerwerk 29 in seiner Außerbetriebsstellung, in der der Werkzeugschlitten 30 mittels eines einerseits mit dem Werkzeugschlitten 30 und andererseits mit einem proximalen Ende 35 des Armabschnitts 15 verbundener Stellzylinder 36 den Werkzeugschlitten 30 in seiner Rückzugsstellung positioniert. In dieser Außerbetriebsstellung des Hammerwerks 29 kann die Schaufel 20 vermittels des über die Drehgelenkeinrichtung 19 auf die Schaufel 20 wirkenden Antriebszylinders 26 von der in **Fig. 6** dargestellten Öffnungsstellung in die in **Fig. 7** dargestellte Schließstellung verschwenkt werden, ohne dass dabei die Schaufel 20 mit einem in das Hammerwerk 29 eingesetzten und auf der Translationsachse T angeordneten Hammermeißel 37 kollidiert.

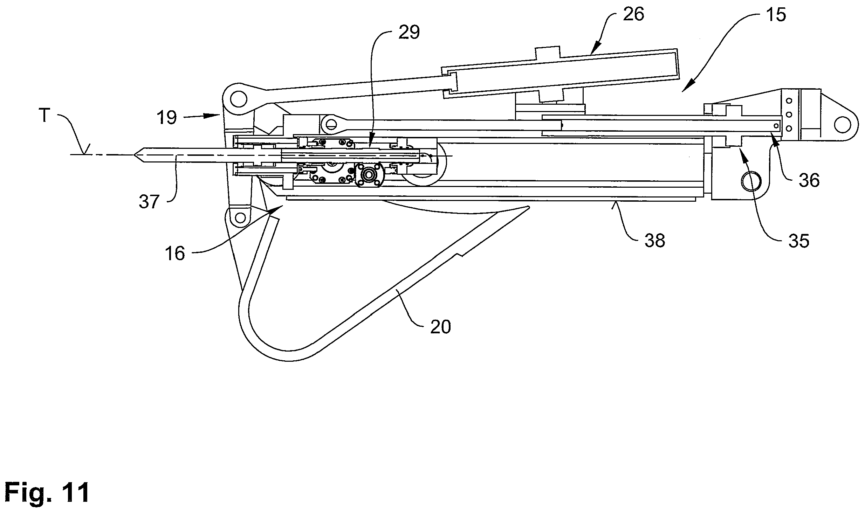

In der in den **Fign. 10** und **11** dargestellten Hammerkonfiguration des Armabschnitts 15 befindet sich die Schaufel 20 in ihrer mit der Schließstellung übereinstimmenden Außerbetriebsstellung, in der die Schaufel 20 vermittels des über die Drehgelenkeinrichtung 19 auf die Schaufel 20 wirkenden Antriebszylinders 26 um die Schwenkachse 25 in Richtung auf eine Unterseite 38 des Armabschnitts 15 verschwenkt ist. In dieser Außerbetriebsstellung der Schaufel 20 kann, wie in **Fig. 10** dargestellt, das Hammerwerk 29 über den einerseits am Werkzeugschlitten 30 und andererseits an dem proximalen Ende 35 angeschlossenen Stellzylinder 36 **(****Fig. 6****)** in seine Betriebsstellung überführt werden, in der der Hammermeißel 37 des Hammerwerks 29 auf der die Schwenkachse 25 kreuzenden Translationsachse T an der Schaufel 20 vorbeigeführt ist und das distale Ende 16 des Armabschnitts 15 überragt.

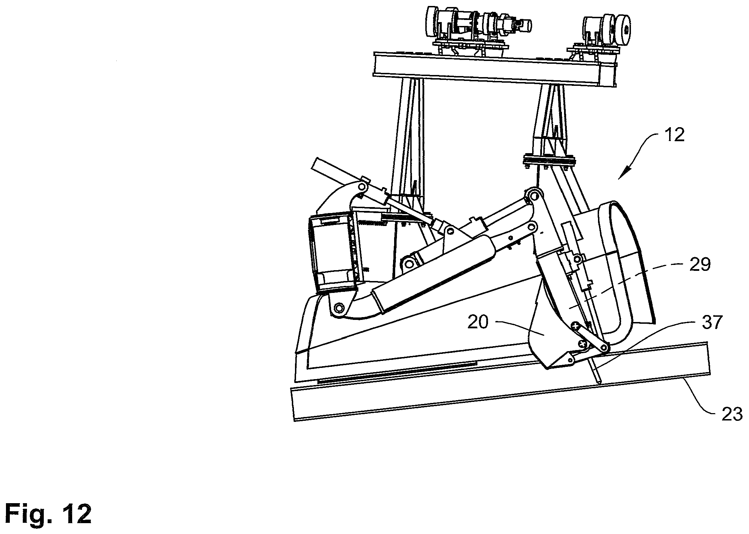

In dieser Hammerkonfiguration des Armabschnitts 15 kann der Hammermeißel 37, wie in **Fig. 12** dargestellt, mittels des Manipulatorarms 12 anstelle der in **Fig. 1** dargestellten Schaufel 20 innerhalb der Abstichrinne 23 positioniert werden, sodass durch das Hammerwerk 29 der Hammermeißel 37 in einer oszillierenden Bewegung auf der Translationsachse T zur Zertrümmerung von in der Abstichrinne 23 nach einem Abstich verbliebenen Rückständen eingesetzt werden kann. Nach Überführung des Armabschnitts 15 in die bereits vorstehend beschriebene Schaufelkonfiguration **(****Fign. 5 und 6****),** in der sich das Hammerwerk 29 mit dem Hammermeißel 37 bzw. der Werkzeugschlitten 30 in seiner in **Fig. 6** dargestellten Außerbetriebsstellung befindet, können anschließend ohne wesentliche Änderung der Position des Manipulatorarms die Rückstände aus der Abstichrinne 23 entnommen werden.

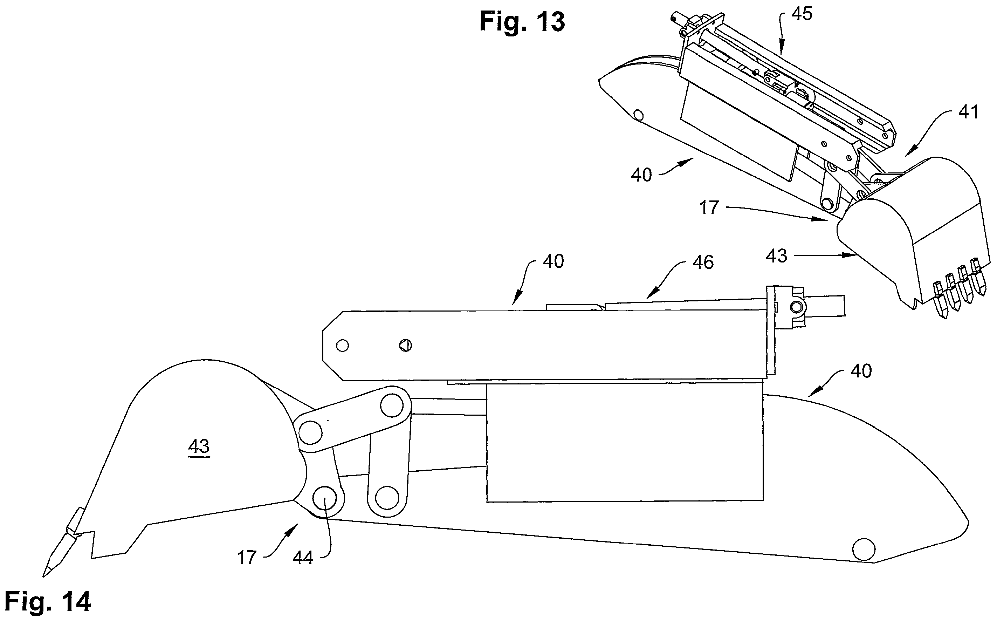

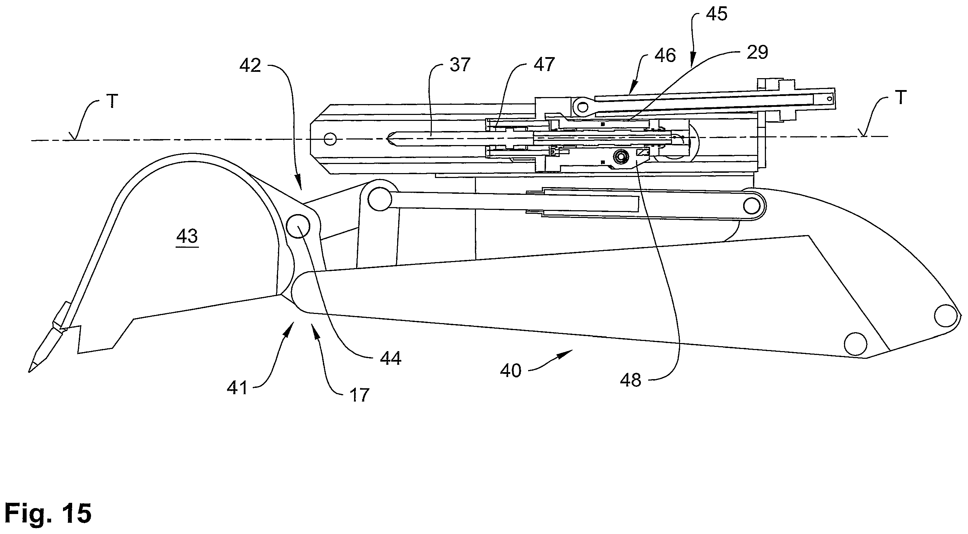

In den **Fig. 13** bis **15** ist in einer weiteren Ausführungsform ein distaler Armabschnitt 40 dargestellt, bei dem im Unterschied zu der im vorstehend erläuterten Ausführungsbeispiel innerhalb des Armabschnitts 15 angeordneten zweiten Werkzeugaufnahme 18, die neben einer ersten am distalen Ende 41 angeordneten Werkzeugaufnahme 42, die zum Anschluss einer Schaufel 43 eine Schwenkachse 44 aufweist, eine zweite Werkzeugaufnahme 45 vorgesehen, die seitlich versetzt zum Armabschnitt 40 angeordnet ist und ein unabhängig vom Armabschnitt 40 ausgebildetes Führungsgehäuse 46 aufweist, das zur Definition einer Translationsachse T einen im Führungsgehäuse 46 längsverschiebbar angeordneten Werkzeugschlitten 48 aufweist.

Wie aus den Darstellungen in den **Fig. 13** bis **15** deutlich wird, ist im Fall dieses Ausführungsbeispiels die Translationsachse T abweichend von der in **Fig. 6** dargestellten Ausführungsform des distalen Armabschnitts 15, bei der sich die Translationsachse T und die Schwenkachse 25 in einer im Wesentlichen gemeinsamen Ebene befinden, die Translationsachse T mit Abstand von der Schwenkachse 44 angeordnet, sodass eine Überführung eines in der Werkzeugaufnahme 45 aufgenommenen Hammerwerks 29 aus der in den **Fig. 13** bis **15** dargestellten Außerbetriebsstellung in eine Betriebsstellung, in der der in das Hammerwerk 29 eingesetzte Hammermeißel 37 das distale Ende 41 des Armabschnitts 40 überragt auch dann möglich ist, wenn sich die Schaufel 43 in der in den **Fig. 13** bis **15** dargestellten Öffnungsstellung befindet.

## Patentansprüche

1. Manipulatorarm (12) zum Anschluss an ein insbesondere in der Peripherie eines metallurgischen Schmelzofens angeordnetes Manipulatorfahrwerk (11), wobei der Manipulatorarm (12) ein proximales Ende (35) zum Anschluss an das Manipulatorfahrwerk (11) und ein mit einer ersten Werkzeugaufnahme (17) versehenes distales Ende (16, 41) zum Anschluss einer Schaufel (20, 43) aufweist,
**dadurch gekennzeichnet,**
**dass** der Manipulatorarm (12) an seinem distalen Ende (16, 41) eine von der ersten Werkzeugaufnahme (17) unabhängig ausgebildete zweite Werkzeugaufnahme (18, 45) zum Anschluss eines Hammerwerks (29) oder Bohrwerks aufweist.

2. Manipulatorarm nach Anspruch 1,
**dadurch gekennzeichnet,**
**dass** die erste Werkzeugaufnahme (17) mit einer Drehgelenkeinrichtung (19) für einen gegenüber dem distalen Ende (16, 41) verschwenkbaren Anschluss der Schaufel (20, 43) um eine am distalen Ende (16, 4) angeordnete Schwenkachse (25, 44) versehen ist, und die zweite Werkzeugaufnahme (18, 45) mit einer Linearführungseinrichtung (39) zur Führung der zweiten Werkzeugaufnahme (18, 45) längs einer die Schwenkachse (25, 44) kreuzenden Translationsachse T versehen ist, derart, dass ein in der zweiten Werkzeugaufnahme (18, 45) aufgenommenes Werkzeug des Hammerwerks (29) oder Bohrwerks an der Schaufel (20, 43) vorbei geführt werden kann.

3. Manipulatorarm nach Anspruch 2,
**dadurch gekennzeichnet,**
**dass** die zweite Werkzeugaufnahme (18) in einem das distale Ende des Manipulatorarms (12) bildenden, mit der Schwenkachse (25) versehenen Armabschnitt (15) ausgebildet ist, derart, dass der Armabschnitt (15) ein die Werkzeugaufnahme (18) aufnehmendes Führungsgehäuse (31) mit der im Führungsgehäuse (31) ausgebildeten Linearführungseinrichtung (39) ausbildet und die Schwenkachse (25) der ersten Werkzeugaufnahme (17) gemeinsam mit der Translationsachse T der zweiten Werkzeugaufnahme (18) innerhalb des Armabschnitts (15) angeordnet ist.

4. Manipulatorarm nach Anspruch 2,
**dadurch gekennzeichnet,**
**dass** die zweite Werkzeugaufnahme (45) seitlich versetzt zu einem das distale Ende des Manipulatorarms (12) bildenden Armabschnitt (40) angeordnet ist, derart, dass ein die zweite Werkzeugaufnahme (45) aufnehmendes Führungsgehäuse (46) neben dem Armabschnitt (40) angeordnet ist.

5. Manipulatorarm nach Anspruch 3 oder 4,
**dadurch gekennzeichnet,**
**dass** die zweite Werkzeugaufnahme (18, 45) einen im Führungsgehäuse (31, 46) längs verschiebbar angeordneten Werkzeugschlitten (30, 47) aufweist.

6. Manipulator (10), insbesondere für den Einsatz in der Peripherie eines metallurgischen Schmelzofens, mit einem Manipulatorarm (12) nach einem der Ansprüche 1 bis 5, wobei das Manipulatorfahrwerk als nicht schienengebundenes Manipulatorfahrwerk, insbesondere als Raupenfahrwerk, ausgebildet ist.

7. Manipulator (10), insbesondere für den Einsatz in der Peripherie eines metallurgischen Schmelzofens, mit einem Manipulatorarm (12) nach einem der Ansprüche 1 bis 5, wobei das Manipulatorfahrwerk (11) schienengebunden ausgebildet ist.

8. Manipulator nach Anspruch 7,
**dadurch gekennzeichnet,**
**dass** das Manipulatorfahrwerk (11) in hängender Anordnung an Schienen (21) geführt ist.

## Claims

1. A manipulator arm (12) for being connected to a manipulator chassis frame (11) disposed in particular in the periphery of a metallurgical smelting furnace, the manipulator arm (12) having a proximal end (35) for being connected to the manipulator chassis frame (11) and a distal end (16, 41) equipped with a first tool receptacle (17) and serving to be connected to a bucket (20, 43),
**characterized in that**
the manipulator arm (12) has a second tool receptacle (18, 45) at its distal end (16, 41), the second tool receptacle (18, 45) being formed irrespectively of the first tool receptacle (17) and being intended to be connected to a hammer mill (29) or a boring machine.

2. The manipulator arm according to claim 1,
**characterized in that**
the first tool receptacle (17) is equipped with a swivel joint element (19) for connecting the bucket (20, 43) in such a manner that it can be swiveled about a swivel axis (25, 44), which is disposed at the distal end (16, 4), in relation to the distal end (16, 41), and the second tool receptacle (18, 45) is equipped with a linear guide element (39) for guiding the second tool receptacle (18, 45) in such a manner along a translational axis T intersecting the swivel axis (25, 44) that a tool of the hammer mill (29) or the boring machine received in the second tool receptacle (18, 45) is guided past the bucket (20, 43).

3. The manipulator arm according to claim 2,
**characterized in that**
the second tool receptacle (18) is formed in such a manner in an arm section (15) forming the distal end of the manipulator arm (12) and equipped with the swivel axis (25) that the arm section (15) forms a guide casing (31) receiving the tool receptacle (18) and having the linear guide element (39) formed in the guide casing (31) and the swivel axis (25) of the first tool receptacle (17) is disposed within the arm section (15) together with the translational axis T of the second tool receptacle (18).

4. The manipulator arm according to claim 2,
**characterized in that**
the second tool receptacle (45) is disposed at a lateral offset to an arm section (40) forming the distal end of the manipulator arm (12) in such a manner that a guide casing (46) receiving the second tool receptacle (45) is disposed beside the arm section (40).

5. The manipulator arm according to claim 3 or 4,
**characterized in that**
the second tool receptacle (18, 45) has a tool slide (30, 47) disposed in the guide casing (31, 46) so as to be longitudinally displaceable.

6. A manipulator (10), in particular for use in the periphery of a metallurgical smelting furnace, having a manipulator arm (12) according to any one of the claims 1 to 5, the manipulator chassis frame being designed as a non-rail-bound manipulator chassis frame, in particular as a crawler track.

7. A manipulator (10), in particular for use in the periphery of a metallurgical smelting furnace, having a manipulator arm (12) according to any one of the claims 1 to 5, the manipulator chassis frame (11) being rail-bound.

8. The manipulator according to claim 7,
**characterized in that**
the manipulator chassis frame (11) is guided in a suspended placement on the rails (21).

## Revendications

1. Bras manipulateur (12) destiné à être relié à un train de manipulateur (11) disposé en particulier à la périphérie d'un four métallurgique à fusion, le bras manipulateur (12) ayant une extrémité proximale (35) destinée à être reliée au train de manipulateur (11) et une extrémité distale (16, 41) équipée d'un premier logement d'outils (17) et destinée à être reliée à un godet (20, 43),
**caractérisé en ce que**
le bras manipulateur (12) a un deuxième logement d'outils (18, 45) à son extrémité distale (16, 41), le deuxième logement d'outils (18, 45) étant formé indépendamment du premier logement d'outils (17) et étant destiné à être relié à un broyeur à marteau (29) ou à une aléseuse.

2. Bras manipulateur selon la revendication 1,
**caractérisé en ce que**
le premier logement d'outils (17) est équipé d'un élément d'articulation tournante (19) pour relier le godet (20, 43) de manière à ce qu'il puisse pivoter autour d'un axe de pivotement (25, 44), qui est disposé à l'extrémité distale (16, 4), par rapport à l'extrémité distale (16, 41), et le deuxième logement d'outils (18, 45) est équipé d'un élément de guidage linéaire (39) pour guider le deuxième logement d'outils (18, 45) le long d'un axe de translation T coupant l'axe de pivotement (25, 44) de telle manière qu'un outil du broyeur à marteau (29) ou de l'aléseuse reçu dans le deuxième logement d'outils (18, 45) est guidé devant le godet (20, 43).

3. Bras manipulateur selon la revendication 2,
**caractérisé en ce que**
le deuxième logement d'outils (18) est formé dans une partie de bras (15) formant l'extrémité distale du bras manipulateur (12) et équipée de l'axe de pivotement (25) de telle manière que la partie de bras (15) forme un boîtier de guidage (31) recevant le logement d'outils (18) et ayant l'élément de guidage linéaire (39) formé dans le boîtier de guidage (31) et l'axe de pivotement (25) du premier logement d'outils (17) est disposé à l'intérieur de la partie de bras (15) conjointement avec l'axe de translation T du deuxième logement d'outils (18).

4. Bras manipulateur selon la revendication 2,
**caractérisé en ce que**
le deuxième logement d'outils (45) est disposé à un décalage latéral par rapport à une partie de bras (40) formant l'extrémité distale du bras manipulateur (12) de telle manière qu'un boîtier de guidage (46) recevant le deuxième logement d'outils (45) est disposé à côté de la partie de bras (40).

5. Bras manipulateur selon la revendication 3 ou la revendication 4, **caractérisé en ce que**
le deuxième logement d'outils (18, 45) a un chariot d'outil (30, 47) disposé dans le boîtier de guidage (31, 46) de manière à être déplacé longitudinalement.

6. Manipulateur (10), en particulier pour utilisation dans la périphérie d'un four métallurgique à fusion, ayant un bras manipulateur (12) selon l'une quelconque des revendications 1 à 5, le train de manipulateur étant conçu comme un train de manipulateur non guidé sur rails, en particulier comme un train à chenilles.

7. Manipulateur (10), en particulier pour utilisation dans la périphérie d'un four métallurgique à fusion, ayant un bras manipulateur (12) selon l'une quelconque des revendications 1 à 5, le train de manipulateur (11) étant guidé sur rails.

8. Manipulateur selon la revendication 7,
**caractérisé en ce que**
le train de manipulateur (11) est guidé dans un agencement suspendu sur les rails (21).
